# DEMANDE DE BREVET EUROPEEN

(11) **EP 1 428 719 A2**
(43) Date de publication de la demande: **16.06.2004**
(21) Numéro de dépôt: 03292998.6
(22) Date de dépôt: 01.12.2003
(51) Int. Cl.: B60N 2/30

(54) **Véhicule automobile équipé d'un siège escamotable à fond plat**

(30) Priorité: 03.12.2002 FR 0215215
(71) Demandeur: Peugeot Citroen Automobiles SA, 92200 Neuilly sur Seine (FR)
(72) Inventeur: Fiorini, Nelson, 95240 Cormeilles en Parisis (FR); Devaux, Daniel, 77183 Croissy Beaubourg (FR)
(74) Mandataire: Thinat, Michel

(57) **Abrégé**

L'invention concerne un véhicule automobile, comprenant un plancher (10), un logement (20) ménagé dans le plancher (10), un siège (30) et un dispositif d'articulation (50) du siège (30) sur le châssis du véhicule permettant d'escamoter le siège (30) dans le logement (20), le siège (30) comprenant une assise (31) mobile, le dispositif d'articulation (50) comprenant un axe d'articulation inférieur (51) transversal s'étendant sous le niveau du plancher (10).

Selon l'invention, le dispositif d'articulation (50) comprend des moyens pour faire passer l'assise (31) de sa position d'utilisation à une position intermédiaire dans laquelle l'axe d'articulation inférieur (51) se trouve dans le plan dans lequel s'étend la base (311) de l'assise (31), l'assise (31) passant de sa position intermédiaire à sa position de rangement dans le logement (20) par rotation autour de l'axe d'articulation inférieur (51).

## Description

L'invention concerne en général les véhicules automobiles et les sièges escamotables pour véhicules automobiles.

Plus précisément, l'invention concerne un véhicule automobile, comprenant un plancher, un logement ménagé dans le plancher, un siège et un dispositif d'articulation du siège sur le châssis du véhicule permettant d'escamoter le siège dans le logement, le siège comprenant une assise mobile entre une position d'utilisation dans laquelle l'assise est horizontale et repose sur le plancher par une base, en avant du logement, et une position de rangement dans laquelle l'assise est disposée à l'intérieur du logement, le dispositif d'articulation comprenant un axe d'articulation inférieur transversal s'étendant sous le niveau du plancher , l'assise passant de sa position d'utilisation à sa position de rangement au moins partiellement par rotation autour de l'axe d'articulation inférieur, l'assise étant liée à l'axe d'articulation inférieur par une partie située à l'arrière de la base quand l'assise est en position d'utilisation.

Des véhicules de ce type sont connus de l'art antérieur, et comprennent un siège dont l'assise repose sur le plancher par une face inférieure. Cette assise est articulée par un bord transversal arrière et pivote à 180° vers l'arrière pour s'escamoter dans le logement. Le dossier se rabat sur l'assise, et se trouve donc sous celle-ci dans le logement. L'axe d'articulation de l'assise se trouve sur le bord avant du logement, légèrement en dessous de la surface du plancher.

Ces véhicules présentent le défaut que, quand l'assise est en position de rangement, sa face inférieure ne vient pas parfaitement s'inscrire dans le prolongement le plancher. Elle vient au contraire se positionner sous l'axe d'articulation, laissant une dénivellation entre le niveau du plancher et celui de la face inférieure de l'assise.

De plus cette dénivellation fait que le siège est positionné plus profondément dans le logement et que l'espace disponible entre le siège et le fond du logement est réduit.

Par ailleurs, le logement est situé entièrement derrière le siège. Cette position est pénalisante car elle allonge le porte-à-faux du véhicule vers l'arrière.

Dans ce contexte, la présente invention a pour but de pallier les défauts mentionnés ci-dessus.

A cette fin, le véhicule de l'invention, par ailleurs conforme à la définition générique qu'en donne le préambule ci-dessus, est essentiellement caractérisé en ce que le dispositif d'articulation comprend des moyens pour faire passer l'assise de sa position d'utilisation à une position intermédiaire dans laquelle l'axe d'articulation inférieur se trouve dans le plan dans lequel s'étend la base de l'assise, ou à proximité immédiate de ce plan, l'assise passant de sa position intermédiaire à sa position de rangement dans le logement par rotation autour de l'axe d'articulation inférieur.

Dans un mode de réalisation possible de l'invention, les moyens pour faire passer l'assise de sa position d'utilisation à sa position intermédiaire comprennent un axe d'articulation supérieur transversal, s'étendant au dessus du plancher, à proximité de l'axe d'articulation inférieur, l'assise passant de sa position d'utilisation à sa position intermédiaire par rotation autour de cet axe d'articulation supérieur.

Avantageusement, les axes d'articulation inférieur et supérieur sont dans une position d'alignement verticale, ou proche de la verticale, dans la position d'utilisation et dans la position intermédiaire de l'assise.

De préférence, les axes d'articulation inférieur et supérieur sont dans une position d'alignement horizontale, ou proche de l'horizontale, dans la position de rangement de l'assise, l'axe d'articulation supérieur étant lié à l'assise en rotation autour de l'axe d'articulation inférieur quand cette assise passe de sa position intermédiaire à sa position de rangement.

De préférence, l'assise comprend un orifice transversal traversant la base, l'axe d'articulation supérieur comprenant une tige centrale transversale traversant l'orifice, cette tige centrale comprenant des parties d'extrémité opposées faisant saillie par rapport à deux faces latérales opposées de cette base .

Avantageusement, l'axe d'articulation inférieur comprend deux supports solidaires du châssis du véhicule, disposés de deux côtés latéraux opposés du siège et présentant des orifices de guidage en rotation respectifs alignés transversalement, en regard l'un de l'autre, et deux tiges latérales transversales, alignées et séparées par un écartement supérieur à la largeur transversale de la base, solidaires des deux parties d'extrémité opposées de la tige centrale et engagées dans les orifices de guidage.

De préférence, le dispositif d'articulation comprend des moyens pour bloquer les tiges latérales en rotation dans les orifice de guidage et des moyens pour autoriser cette rotation quand l'assise est située entre sa position intermédiaire et sa position de rangement.

Par exemple, l'axe d'articulation inférieur s'étend immédiatement sous le plancher et est tangent à ce plancher.

Avantageusement, l'assise présente un bord arrière tourné vers l'arrière quand l'assise est en position d'utilisation, les axes d'articulation supérieur et inférieur s'étendant à distance de ce bord arrière.

De préférence, la base de l'assise présente une face inférieure plate reposant sur le plancher en position d'utilisation, et venant fermer le logement en position de rangement, cette face inférieure étant alors de niveau avec le plancher.

Par exemple, l'axe d'articulation inférieur est tangent à la face inférieure plate de la base dans la position intermédiaire de l'assise.

D'autres caractéristiques et avantages de l'invention ressortiront clairement de la description qui en est faite ci-dessous, à titre indicatif et nullement limitatif, en référence aux figures annexées, parmi lesquelles :

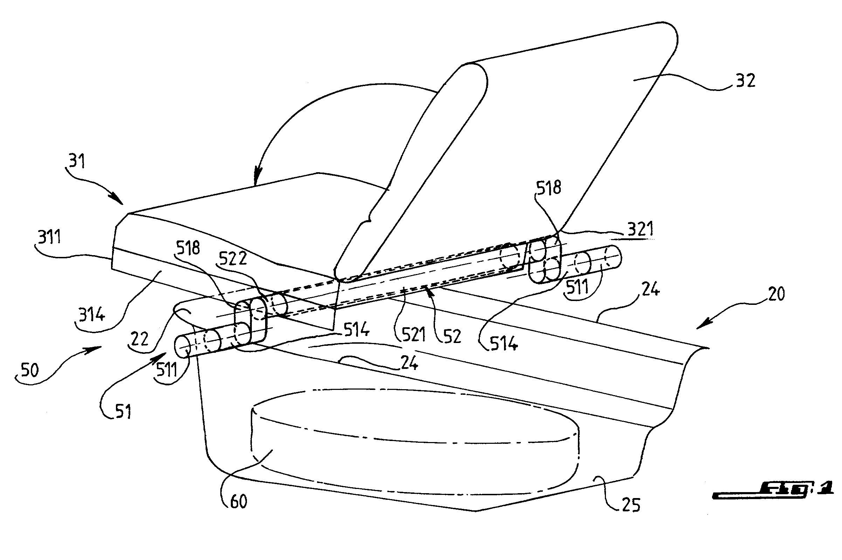

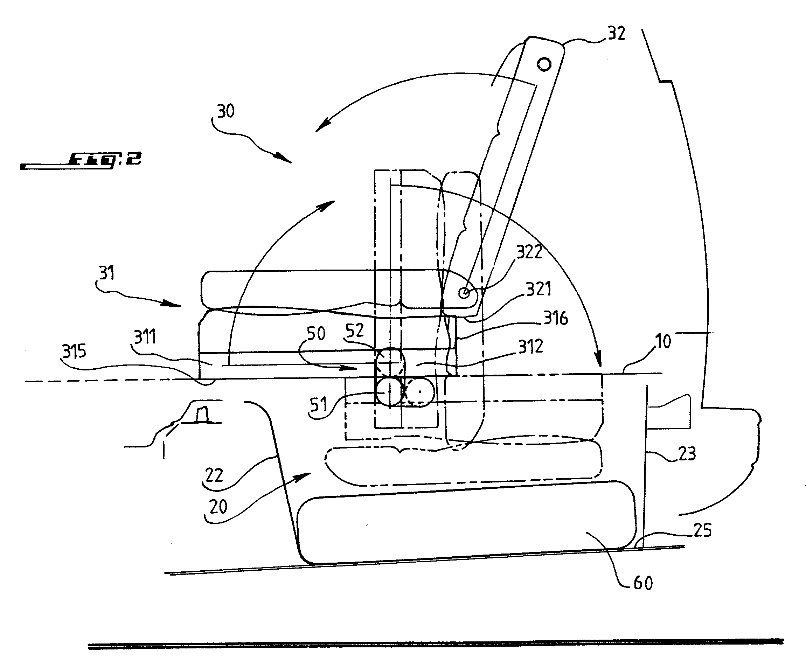

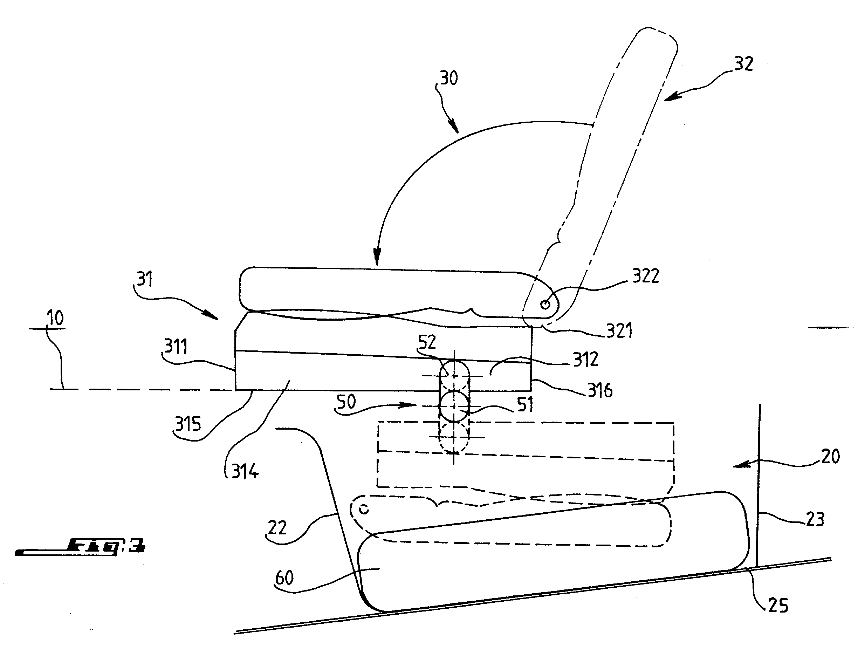

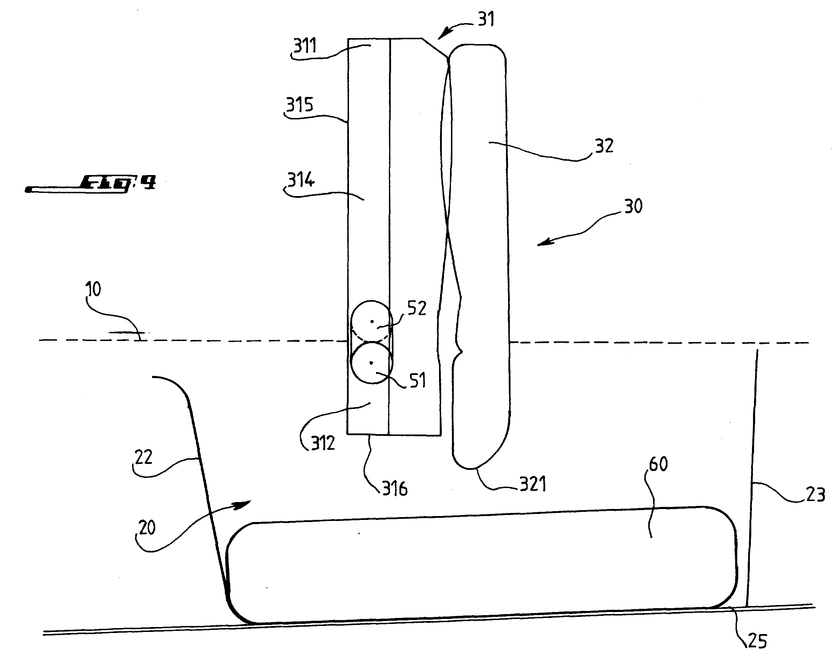

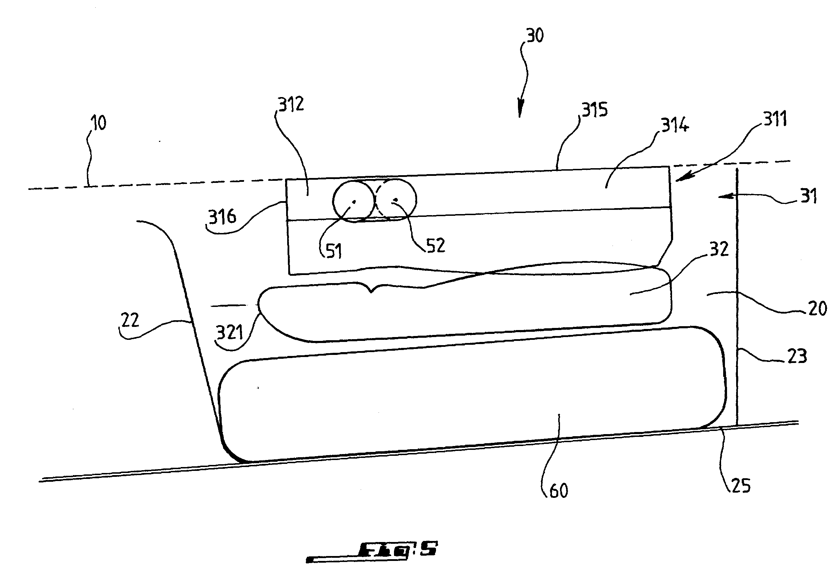

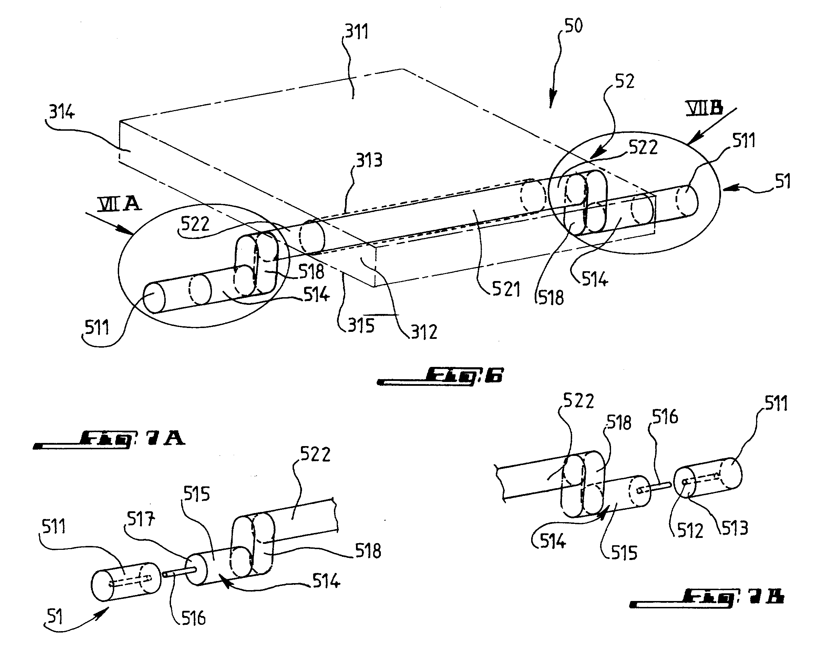

- la figure 1 est une vue en perspective arrière du siège escamotable et du logement d'un véhicule selon l'invention,
- la figure 2 est une vue en coupe dans un plan longitudinal de la partie arrière du véhicule, le siège étant représenté en position d'utilisation en traits pleins, en position intermédiaire en traits mixtes et en position de rangement dans un autre type de traits mixtes,
- la figure 3 est une vue similaire à la figure 2 montrant le siège dans sa position d'utilisation,
- la figure 4 est une vue similaire à la figure 2 montrant le siège dans sa position intermédiaire,
- la figure 5 est une vue similaire à la figure 2 montrant le siège dans sa position de rangement,
- la figure 6 est une vue en perspective de la traverse constituant les premier et deuxième axes de rotation de l'assise du siège, et
- les figures 7A et 7B sont des vues éclatées de détails VIIA et VIIB de la figure 6.

Le véhicule automobile dont une partie arrière est représenté sur la figure 2 comprend un plancher 10, un logement 20 ménagé dans le plancher 10, un siège 30 et un dispositif d'articulation 50 du siège 30 sur le châssis du véhicule permettant d'escamoter le siège 30 dans le logement 20.

Le logement 20 présente une face ouverte découpée dans le plancher 10 mettant en communication le logement 20 et l'intérieur du véhicule. Ce logement 20 présente une forme générale parallélépipédique, et est délimité par des parois transversales avant et arrière opposées 22 et 23, deux parois opposées longitudinales 24 et un fond 25.

Le siège 30 comprend un dossier 32 transversal, et une assise 31, transversale elle aussi, comprenant un coussin et une base 311 sur laquelle est fixé le coussin. La base 311 est une structure rigide de support du coussin, qui peut être pleine ou creuse.

L'assise 31 est mobile entre une position d'utilisation, dans laquelle l'assise 31 est horizontale, et une position de rangement dans laquelle l'assise 31 est disposée à l'intérieur du logement 20.

Dans sa position d'utilisation, l'assise 31 repose sur le plancher par sa base 311, le coussin étant alors disposé au dessus de la base 311.

L'assise 31 est décalée longitudinalement vers l'avant par rapport au logement 20 dans sa position d'utilisation.

Par ailleurs, le dispositif d'articulation 50 comprend un axe d'articulation inférieur 51 transversal s'étendant à travers le logement 20, sous le niveau du plancher 10. Cet axe 51 est relativement plus proche de la paroi transversale avant 22 du logement 20 que de sa paroi transversale arrière 23.

L'assise 31 est liée à l'axe d'articulation inférieur 51 par une partie 312 située à l'arrière de la base 311 quand l'assise 31 est en position d'utilisation.

L'assise 31 passe de sa position d'utilisation à sa position de rangement au moins partiellement par rotation autour de l'axe d'articulation inférieur 51.

Le dossier 32 est mobile en rotation par rapport à l'assise 31, entre une position déployée dans laquelle le dossier 32 fait un angle proche ou supérieur à 90° par rapport au coussin de l'assise 31, et une position rabattue dans laquelle le dossier 32 est plaqué contre le coussin de l'assise 31. Le dossier 32 est, dans ce but, articulé par un bord inférieur 321 sur un bord arrière 316 de l'assise 31 à l'aide d'un axe d'articulation de dossier transversal 322. Le bord inférieur 321 est le bord transversal du dossier 32 situé le plus près du plancher 10 en position déployée du dossier 32. Le bord arrière 316 de l'assise 31 est tourné vers l'arrière quand l'assise 31 est en position d'utilisation.

Selon l'invention, le dispositif d'articulation 50 comprend des moyens pour faire passer l'assise 31 de sa position d'utilisation à une position intermédiaire dans laquelle l'axe d'articulation inférieur 51 se trouve dans le plan dans lequel s'étend la base 311 de l'assise 31, ou à proximité immédiate de ce plan, comme le montre la figure 4.

L'assise 31 passe alors de sa position intermédiaire à sa position de rangement dans le logement 20 par rotation autour de l'axe d'articulation inférieur 51, la position de rangement étant illustrée sur la figure 5.

Les moyens pour faire passer l'assise 31 de sa position d'utilisation à sa position intermédiaire comprennent un axe d'articulation supérieur 52 transversal, s'étendant au-dessus du plancher 10, à proximité de l'axe d'articulation inférieur 51, l'assise 31 passant de sa position d'utilisation à sa position intermédiaire par rotation autour de cet axe d'articulation supérieur 52.

Comme on peut le voir sur la figure 2, les axes d'articulation supérieur et inférieur 51 et 52 sont dans une position d'alignement verticale ou proche de la verticale, dans la position d'utilisation et dans la position intermédiaire de l'assise 31, et restent fixes pendant que l'assise 31 passe de sa position d'utilisation à sa position intermédiaire.

L'assise 31 est donc sensiblement verticale dans sa position intermédiaire. Elle a pivoté vers l'arrière d'environ 90 degrés autour de l'axe d'articulation supérieur 52 pour passer de sa position d'utilisation à sa position intermédiaire.

Dans sa position de rangement, l'assise 31 s'étend sensiblement horizontalement, sa base 311 étant tournée vers le haut. Elle pivote vers l'arrière d'environ 90 degrés autour de l'axe d'articulation inférieur 51 pour passer de sa position intermédiaire à sa position de rangement.

L'axe d'articulation supérieur 52 est lié à l'assise 31 en rotation autour de l'axe d'articulation inférieur 51 quand l'assise 31 passe de sa position intermédiaire à sa position de rangement, et décrit donc une rotation autour de l'axe d'articulation inférieur 51.

Les axes d'articulation inférieur et supérieur 51 et 52 sont donc dans une position d'alignement horizontal, ou proche de l'horizontale, dans la position de rangement de l'assise 31, comme on peut le voir sur la figure 5.

On notera que la base 311 de l'assise 31 présente une face inférieure 315 plate, reposant sur le plancher 10 en position d'utilisation, et venant fermer l'ouverture 21 du logement 20 en position de rangement. Cette face inférieure 315 se trouve parfaitement dans l'alignement du plancher 10 en position de rangement de l'assise 31.

Un tel résultat peut être obtenu en choisissant correctement les diamètres des axes d'articulation, leurs positions relativement au plancher, et l'angle de rotation séparant la position d'utilisation et la position intermédiaire de l'assise, de telle sorte que l'axe d'articulation inférieur 51 est tangent à la face inférieure plate 315 de la base 311 en position intermédiaire de l'assise 31.

Le dossier 32 reste dans sa position rabattue sur l'assise 31 quand celle-ci passe de sa position d'utilisation à sa position intermédiaire puis à sa position de rangement. Dans la position de rangement, le dossier 32 est donc situé en dessous de l'assise 31, et s'étend dans un plan proche de l'horizontale.

On va maintenant décrire dans le détail un mode de réalisation des axes d'articulation inférieur et supérieur 51 et 52, en référence aux figures 6 et 7A/7B.

L'assise 31 comprend un orifice transversal 313 cylindrique, traversant entièrement la base 311, et débouchant sur deux faces latérales 314 opposées de la base 311. L'axe d'articulation supérieur 52 comprend une tige centrale 521 cylindrique, d'axe de symétrie transversal, et de diamètre correspondant à celui de l'orifice transversal 313. La tige centrale 521 traverse entièrement l'orifice 313, et comprend des parties d'extrémité opposées 522 faisant saillie par rapport aux deux faces latérales opposées 314 de la base 311. Les parties d'extrémité 522 présentent le même diamètre que le reste de la tige centrale 521 et sont fixes relativement au reste de la tige centrale 521.

L'axe d'articulation inférieur 51 comprend deux supports 511 solidaires du châssis du véhicule, disposés des deux côtés latéraux opposés de la base 311 de l'assise 31. Ces supports sont par exemple fixés sur les longeronnets arrière du véhicule. Les supports 511 présentent une forme généralement cylindrique d'axe de symétrie transversal, et comprennent, sur des faces axiales planes 513 tournées vers la base 311, des orifices de guidage en rotation 512 respectifs. Ces orifices s'étendent transversalement et sont alignés l'un avec l'autre. Ils sont disposés en regard l'un de l'autre. Le diamètre des support 511 est sensiblement égal au diamètre de la tige centrale 521.

L'axe d'articulation inférieur 51 comprend également deux tiges latérales 514 transversales, alignées, disposée des deux côtés latéraux opposés de la base 311 du siège 30, et séparées transversalement par un écartement supérieur à la largeur transversale de la base 311.

Ces tiges comprennent chacune une partie intérieure 515 cylindrique d'axe de symétrie transversal, et une partie extérieure 516 présentant la forme d'un ergot transversal de section circulaire. Le diamètre de la partie intérieure 515 est sensiblement égal au diamètre de la tige centrale 521 et au diamètre du support 511.

Comme le montre la figure 6, la partie intérieure 515 est rigidement fixée par une pièce intermédiaire 518 sur la partie d'extrémité 522 de la tige centrale 521 située du même côté de la base 311.

Les axes de symétrie de la partie intérieure 515 et de la tige centrale 521 sont séparés par un écartement correspondant au diamètre de la partie intérieure 515 et de la tige centrale 521. La tige centrale 521 et la partie intérieure 515, vues suivant une incidence latérale, sont donc tangentes l'une à l'autre, comme on peut le voir sur les figures 2 à 5.

La pièce intermédiaire 518, vue suivant une incidence latérale, s'inscrit dans la continuité de la tige centrale 521 et de la partie intérieure 515. Elle comprend deux parties d'extrémités semi-circulaires opposées, constituant les prolongements de la tige centrale 521 et de la partie intérieure 515, reliées par des bords droit. La tige centrale 521 est solidaire d'une face transversale de la pièce intermédiaires 518 tournée vers la base 311 et la partie intérieure 515 d'une autre face transversale de la pièce intermédiaire tournée à l'opposée de la base 311.

Les parties extérieures 516 des tiges latérales 514 sont solidaires des parties intérieures 515 et s'étendent transversalement, à partir de faces axiales planes 517 des parties intérieures 515 opposées à la base 311. Ces parties extérieures 516 font saillies au centre des dites faces axiales et sont engagées dans les orifices de guidage en rotation 512 des supports 511.

Les supports 511 et les tiges latérales 514 se comportent donc comme les gonds d'une porte, les faces axiales planes 517 des parties intérieures 515 pivotant contre des faces axiales planes 513 des supports 511.

Le dispositif d'articulation 50 comprend des moyens pour bloquer les tiges latérales 514 en rotation dans les orifice de guidage 512 quand l'assise 31 est située entre sa position d'utilisation et sa position intermédiaire, et des moyens pour autoriser cette rotation quand l'assise 31 est située entre sa position intermédiaire et sa position de rangement.

Enfin, on notera que les axes d'articulation supérieur et inférieur 52 et 51 s'étendent à distance du bord arrière 316 de l'assise 31.

On comprend bien l'intérêt de l'invention en comparant les figures 3 à 5 . La figure 3 montre que la face inférieure plate 315 de la base 311 repose sur le plancher 10 du véhicule en position d'utilisation de l'assise 31, l'axe d'articulation inférieur 51 étant situé légèrement en dessous de ce plancher, de façon à ce que la face inférieure plate 315 soit approximativement tangente à cet axe .

Dans un véhicule conforme à l'art antérieur, dans lequel l'assise passerait de sa position d'utilisation à sa position de rangement uniquement en pivotant autour de l'axe d'articulation inférieur 51, la face inférieure plate 315 de la base 311 serait, dans la position de rangement de l'assise 31, tangente à l'axe 51 et située immédiatement en dessous de celui-ci. Cette position est représentée en pointillés sur la figure 3. Il existerait alors une dénivellation entre la face inférieure 315 de la base et le plancher 10.

La face inférieure 315 ne pourrait donc pas venir obturer le logement en position de rangement, en étant de niveau avec le plancher.

Par ailleurs, l'assise et le dossier sont relativement bas par rapport au plancher, du fait de l'existence de la dénivellation entre la face inférieure de la base et le plancher.

Enfin, le bord arrière 316 de l'assise et le bord inférieur 321 du dossier 32 décrivent des cercles larges autour de l'axe d'articulation inférieur 51.

Dans l'invention, un premier mouvement de rotation autour de l'axe d'articulation supérieur 52 permet de placer l'assise dans une position proche de la verticale, c'est-à-dire dans un plan contenant l'axe d'articulation inférieur 51. La base 311 vient se placer entre les deux tiges latérale 514, dont l'écartement est suffisant pour autoriser ce mouvement.

L'axe d'articulation supérieur 52 étant plus haut que l'axe d'articulation inférieur 51, le débattement du bord arrière 316 de l'assise et du bord inférieur 321 du dossier 32 dans le logement 20 est diminué.

De plus, l'axe d'articulation inférieur 51 étant dans le plan de la base 311 en position intermédiaire de l'assise, il est possible de faire pivoter l'assise 31 autour de cet axe et d'obtenir une dénivellation très réduite, voire nulle, entre la face inférieure 315 de la base et le plancher 10.

Dans l'exemple représenté sur les figures, les axes d'articulation 51 et 52 présentent le même diamètre, et sont disposés symétriquement par rapport au plancher 10. L'assise pivote de 90 degrés environ pour passer de sa position d'utilisation à sa position de rangement, amenant la face inférieure 315 de la base dans un plan quasiment tangent aux deux axes d'articulation en position intermédiaire de l'assise. Après pivotement autour de l'axe d'articulation inférieur, la face inférieure 315 de la base vient se placer au niveau du plancher, comme le montre la figure 5.

Diminuer ou annuler ainsi le jeu entre la face inférieure de la base et le plancher permet de dégager un espace sous le siège dans le fond du logement. Cet espace peut être mis à profit pour loger, par exemple, une roue de secours galette, c'est-à-dire de faible épaisseur.

Enfin, on notera que la position des axes d'articulation 51 et 52 à distance du bord arrière 316 de l'assise 31 permet ramener le logement 20 plus vers l'avant du véhicule que dans l'art antérieur, et permet de limiter le porte à faux du véhicule vers l'arrière.

Dans une variante de réalisation, la tige centrale 521 de l'axe d'articulation supérieur 52 et les parties intérieures 515 de l'axe d'articulation inférieur 51 sont constituées d'une seule pièce, cintrée pour lui donner la forme décrite plus haut.

## Revendications

1. Véhicule automobile, comprenant un plancher (10), un logement (20) ménagé dans le plancher (10), un siège (30) et un dispositif d'articulation (50) du siège (30) sur le châssis du véhicule permettant d'escamoter le siège (30) dans le logement (20), le siège (30) comprenant une assise (31) mobile entre une position d'utilisation dans laquelle l'assise (31) est horizontale et repose sur le plancher (10) par une base (311), en avant du logement (20), et une position de rangement dans laquelle l'assise (31) est disposée à l'intérieur du logement (20), le dispositif d'articulation (50) comprenant un axe d'articulation inférieur (51) transversal s'étendant sous le niveau du plancher (10), l'assise (31) passant de sa position d'utilisation à sa position de rangement au moins partiellement par rotation autour de l'axe d'articulation inférieur (51), l'assise (31) étant liée à l'axe d'articulation inférieur (51) par une partie (312) située à l'arrière de la base (311) quand l'assise (31) est en position d'utilisation, **caractérisé en ce que** le dispositif d'articulation (50) comprend des moyens pour faire passer l'assise (31) de sa position d'utilisation à une position intermédiaire dans laquelle l'axe d'articulation inférieur (51) se trouve dans le plan dans lequel s'étend la base (311) de l'assise (31), ou à proximité immédiate de ce plan, l'assise (31) passant de sa position intermédiaire à sa position de rangement dans le logement (20) par rotation autour de l'axe d'articulation inférieur (51).

2. Véhicule suivant la revendication 1, **caractérisé en ce que** les moyens pour faire passer l'assise (31) de sa position d'utilisation à sa position intermédiaire comprennent un axe d'articulation supérieur (52) transversal, s'étendant au-dessus du plancher (10), à proximité de l'axe d'articulation inférieur (51), l'assise (31) passant de sa position d'utilisation à sa position intermédiaire par rotation autour de cet axe d'articulation supérieur (52).

3. Véhicule suivant la revendication 2, **caractérisé en ce que** les axes d'articulation inférieur et supérieur (51, 52) sont dans une position d'alignement verticale ou proche de la verticale dans la position d'utilisation et dans la position intermédiaire de l'assise (31).

4. Véhicule suivant la revendication 3, **caractérisé en ce que** les axes d'articulation inférieur et supérieur (51, 52) sont dans une position d'alignement horizontale, ou proche de l'horizontale, dans la position de rangement de l'assise (31), l'axe d'articulation supérieur (52) étant lié à l'assise (31) en rotation autour de l'axe d'articulation inférieur (51) quand cette assise (31) passe de sa position intermédiaire à sa position de rangement.

5. Véhicule suivant l'une quelconque des revendications 2 à 4, **caractérisé en ce que** l'assise (31) comprend un orifice transversal (313) traversant la base (311), l'axe d'articulation supérieur (52) comprenant une tige centrale transversale (521) traversant l'orifice (313), cette tige centrale (521) comprenant des parties d'extrémité opposées (522) faisant saillie par rapport à deux faces latérales opposées (314) de cette base (311) .

6. Véhicule suivant la revendication 5, **caractérisé en ce que** l'axe d'articulation inférieur (51) comprend deux supports (511) solidaires du châssis du véhicule, disposés de deux côtés latéraux opposés du siège (30) et présentant des orifices de guidage en rotation (512) respectifs alignés transversalement, en regard l'un de l'autre, et deux tiges latérales (514) transversales, alignées et séparées par un écartement supérieur à la largeur transversale de la base (311), solidaires des deux parties d'extrémité (522) opposées de la tige centrale (521) et engagées dans les orifices de guidage (512).

7. Véhicule suivant la revendication 6, **caractérisé en ce que** le dispositif d'articulation (50) comprend des moyens pour bloquer les tiges latérales (514) en rotation dans les orifice de guidage (512) et des moyens pour autoriser cette rotation quand l'assise (31) est située entre sa position intermédiaire et sa position de rangement.

8. Véhicule suivant l'une quelconque des revendications 2 à 7, **caractérisé en ce que** l'assise (31) présente un bord arrière (316) tourné vers l'arrière quand l'assise (31) est en position d'utilisation, les axes d'articulation inférieur et supérieur (51, 52) s'étendant à distance de ce bord arrière (316).

9. Véhicule suivant l'une quelconque des revendications précédentes, **caractérisé en ce que** l'axe d'articulation inférieur (51) s'étend immédiatement sous le plancher (10) et est tangent à ce plancher (10).

10. Véhicule suivant l'une quelconque des revendications précédentes, **caractérisé en ce que** la base (311) de l'assise (31) présente une face inférieure plate (315) reposant sur le plancher (10) en position d'utilisation, et venant fermer le logement (20) en position de rangement, cette face inférieure (315) étant alors de niveau avec le plancher (10).

11. Véhicule suivant la revendication 10, **caractérisé en ce que** l'axe d'articulation inférieur (51) est tangent à la face inférieure plate (315) de la base (311) dans la position intermédiaire de l'assise (31).
